# EUROPÄISCHE PATENTSCHRIFT

(11) **EP 0 695 829 B1**
(45) Veröffentlichungstag und Bekanntmachung des Hinweises auf die Patenterteilung: **01.04.1998**
(21) Anmeldenummer: 95109262.6
(22) Anmeldetag: 14.06.1995
(51) Int. Cl.: D21G 1/02, F16C 13/00

(54) **Walzenanordnung**
Roll arrangements
Aménagements de rouleaux

(30) Priorität: 01.07.1994 DE 4423213
(43) Veröffentlichungstag der Anmeldung: 07.02.1996
(73) Patentinhaber: Voith Sulzer Papiermaschinen GmbH, 89509 Heidenheim (DE)
(72) Erfinder: Renn, Sandra, D-88214 Ravensburg (DE); Stotz, Wolf-Gunter, D-88214 Ravensburg (DE)
(74) Vertreter: Finsterwald, Manfred, Dipl.-Ing., Dipl.-Wirtsch.-Ing.

(56) Entgegenhaltungen:
- EP-A- 0 340 193
- DE-U- 9 205 796
- GB-A- 2 011 555
- GB-A- 2 041 161

## Beschreibung

Die Erfindung betrifft eine Walzenanordnung mit einem drehbaren, vorzugsweise flexiblen Walzenmantel, einem feststehenden Träger und einer zwischen dem Walzenmantel und dem Träger angeordneten mehrteiligen Stützanordnung, die in Radialrichtung zum Walzenmantel bewegbare Gleitschuhe mit dem Walzenmantel zugewandten Stützflächen umfaßt.

Derartige Walzenanordnungen werden beispielsweise zur Behandlung von Papierbahnen eingesetzt. Insbesondere beim Glätten von Papierbahnen kommt es in sehr hohem Maße darauf an, daß die Preßkraft, die auf die Papierbahn durch die Stützanordnungen über den Walzenmantel aufgebracht wird, über die Breite der Papierbahn gleichmäßig ist. So können bereits kleinste Unterschiede in der Preßkraft zu verhältnismäßig großen Unterschieden bezüglich des Glätteffekts führen. In der Praxis wirkt sich dies dahingehend aus, daß die Papierbahn nach dem Durchlaufen der Glättzone über ihre Breite hinweg unterschiedlich stark geglättet ist. Derartige Unterschiede stellen Qualitätsmängel dar, die das Papier unverkäuflich machen können.

Aus der DE 43 22 876 A1 ist eine zum Glätten einer Papierbahn bestimmte Walzenanordnung bekannt, bei der Stützanordnungen in Form von gegen den Walzenmantel drückbaren Gleitschuhen verwendet werden, die aus einzelnen Sektionen in Gestalt von Balken aufgebaut sind, welche in Laufrichtung aufeinander folgen. Die Balken können auch quer zur Bahnlaufrichtung in Abschnitte unterteilt sein. Den einzelnen Sektionen oder Abschnitten kann entweder ein einziges großes Anpreßelement zugeordnet werden, das den gesamten, aus einzelnen Sektionen bestehenden Schuh beaufschlagt, oder es können mehrere Anpreßelemente verwendet werden, die den einzelnen Sektionen oder Abschnitten zugeordnet sind. Durch diese Aufteilung des Gleitschuhs in einzelne Abschnitte oder Sektionen soll erreicht werden, daß in einem einteiligen Schuh auftretende und die Glättqualität beeinträchtigende Verzugseffekte vermieden werden und auch bei sich ändernden Betriebstemperaturen die Geometrie der Glättzone erhalten bleibt.

Um zu verhindern, daß die unvermeidbaren Trennfugen zwischen den einzelnen Abschnitten bzw. Sektionen Spuren in der Papierbahn hinterlassen, ist bei dieser bekannten Anordnung vorgesehen, die der Walze zugewandte Fläche des aus einzelnen Sektionen bestehenden Gleitschuhs mittels einer eine Gleitfläche bildenden Auflage abzudecken, die biegeschlaff ausgebildet ist und aus einer Folie oder einem Metallblech bestehen kann.

Mittels einer derartigen Auflage, die im übrigen nur dann verwendbar ist, wenn keine hydrostatische Abstützung des Walzenmantels erforderlich ist, kann jedoch ein Unterstützungsverlust an den Spalten zwischen den einzelnen Sektionen nicht vermieden werden, und ein derartiger, sich aus der Aufteilung eines einheitlichen Gleitschuhs in einzelne Abschnitte oder Sektionen ergebender Verlust an Stützkraft und Öl im Bereich der vorhandenen Spalte wirkt sich auf den Preßkraftverlauf quer zur Bahnlaufrichtung negativ aus und führt zu Qualitätsmängeln des jeweils bearbeiteten Produkts.

Aufgabe der Erfindung ist es, eine Walzenanordnung der eingangs angegebenen Art so auszubilden, daß die nachteiligen Spalt-Verluste von Hydraulikflüssigkeit und damit an Stützkraft vermieden oder zumindest weitestgehend ausgeschaltet werden.

Diese Aufgabe wird im wesentlichen dadurch gelöst, daß in Axialrichtung und / oder in Umfangsrichtung des Walzenmantels benachbart angeordnete Gleitschuhe zumindest gruppenweise unter Aufrechterhaltung einer relativen Beweglichkeit zwischen den einzelnen Gleitschuhen spaltfrei angeordnet gegeneinander verspannt sind.

Durch die erfindungsgemäßen Maßnahmen wird eine mehrteilige Stütz anordnung geschaffen, die sich im wesentlichen wie eine einteilige Stützanordnung verhält, jedoch deren Nachteile hinsichtlich der Anpassungsfähigkeit an den jeweiligen Walzenmantel, der steif bis hochflexibel ausgebildet sein kann, nicht aufweist. Die von Verzug, Wärmeausdehnung bzw. Geometriefehlern herrührenden Mängel einteiliger Gleitschuhe, die auch für die hydrodynamische oder hydrostatische Schmierung schädlich sind, treten bei der erfindungsgemäßen Anordnung nicht mehr störend in Erscheinung, so daß beim praktischen Einsatz derartiger Walzenanordnungen überraschend vorteilhafte Ergebnisse, insbesondere hinsichtlich der erzielbaren Gleichmäßigkeit oder gezielt steuerbaren Ungleichförmigkeit des Preßkraftverlaufs im Preßspalt erhalten werden. Die Qualität einer mittels einer derartigen Walzenanordnung bearbeiteten Papierbahn kann somit wesentlich gesteigert werden.

Benachbart angeordnete Gleitschuhe liegen vorzugsweise nicht vollflächig aneinander, sondern sind nur über stützflächenseitig gelegene, stegförmig ausgebildete Anlageflächen miteinander in Berührung, so daß die die einzelnen Gleitschuhe zusammenhaltende Spannkraft nur im Bereich dieser vergleichsweise kleinflächigen Anlageflächen zur Wirkung kommt. Diese Ausbildung gewährleistet, daß, im Falle des Auftretens von Kipptendenzen zwischen benachbarten Gleitschuhen, die sich ergebende Kippachse nur einen geringen Abstand zu dem jeweiligen Walzenmantel besitzt und sich dadurch nur sehr kleine, sich zum Träger hin praktisch nicht öffnende Keilspalte ergeben, die zu keinem merkbaren Verlust an Hydraulikflüssigkeit und damit praktisch auch zu keinem Preßkraftabfall führen.

Die gegenseitige Verspannung der einzelnen Gleitschuhe erfolgt vorzugsweise mittels Spanndrähten, die durch Bohrungen geführt sind, die die Gleitschuhe im Bereich der Anlageflächen durchsetzen.

Ein weiterer Vorteil auch bei Einsatz dieser Erfindung bei biegesteifen Mänteln ergiebt sich daraus, daß die benötigte Schmierfilm-Ölmenge bis zu über die Hälfte reduziert ist. Dies im Gegensatz zu herkömmlichen einzelnen, mit Abstand zueinander angeordneten Gleitschuhen, da diese über ihre gesamte Stützflächenbegrenzung Öl verlieren.

Weitere besonders vorteilhafte Ausgestaltungen und Merkmale der Erfindung sind in den Unteransprüchen angegeben und werden auch in der folgenden Beschreibung von Ausführungsbeispielen einer Walzenanordnung nach der Erfindung unter Bezugnahme auf die Zeichnung erläutert; in der Zeichnung zeigt:
- Figur 1: eine erste Ausführungsform einer Walzenanordnung gemäß der Erfindung in einem Teil-Längsschnitt;
- Figur 2: eine weitere erfindungsgemäße Walzenanordnung im Teil-Längsschnitt;
- Figur 3: ausschnittsweise mehrere nebeneinanderliegende Gleitschuhe einer Walzenanordnung in Draufsicht;
- Figur 4: eine Teilschnittdarstellung zweier aneinandergrenzender Gleitschuhe, und
- Figur 5: eine Draufsicht auf die Anlagefläche des rechten Gleitschuhs nach Figur 4.

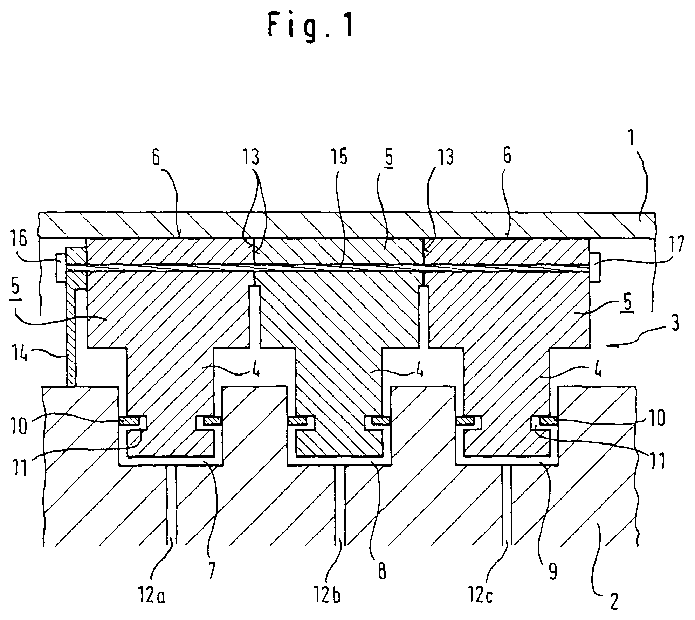

Nach Figur 1 umfaßt eine Walzenanordnung gemäß der Erfindung einen Walzenmantel 1, einen feststehenden Träger 2 und eine zwischen Walzenmantel 1 und Träger 2 vorgesehene Stützanordnung 3.

Die Stütz anordnung 3 besteht aus mehreren aneinandergrenzenden Gleitschuhen 5 mit jeweils zugeordneten Fußteilen 4, die mit den Gleitschuhen 5 einteilig ausgebildet oder mit dem Gleitschuh 5 kippbar verbunden sein können.

Jeder Gleitschuh 5 weist eine dem Walzenmantel 1 zugeordnete und in Angleichung an dessen Form ausgebildete Stützfläche 6 auf. Bei entsprechender Flexibilität des Walzenmantels 1 können die Gleitschuhe 5 erforderlichenfalls eine konvexe Stützflächenform besitzen.

Die Fußteile 4 der Gleitschuhe 5 greifen kolbenartig in Druckkammern 7, 8, 9 ein, welche in dem Träger 2 ausgebildet sind. In Ausnehmungen 11 der Fußteile 4 sind Dichtelemente 10 angeordnet, die an den Druckkammerwandungen anliegen.

Die Druckkammern 7, 8, 9 können individuell über in dem Träger 2 vorgesehene Bohrungen 12 a, 12 b, 12 c mit Druckmittel beaufschlagt werden, so daß die Abstützkräfte individuell gewählt werden können.

Jeweils benachbart angeordnete Gleitschuhe 5 der Stützanordnung 3 liegen nicht vollflächig, sondern nur über stützflächenseitig gelegene, insbesondere auch als Dichtflächen wirkende Anlageflächen 13 direkt aneinander an und sind in diesem Anlagezustand miteinander verspannt.

Die Anlageflächen 13, an denen die Verspannkräfte wirksam werden, sind vergleichsweise kleinflächig ausgebildet und erstrecken sich bis zur jeweiligen Stützfläche 6, so daß zwischen den einzelnen Gleitschuhen 5 praktisch ein spaltfreier Übergang geschaffen wird. Die gegenseitige Verspannung der Gleitschuhe 5 gewährleistet zwar weiterhin eine relative Beweglichkeit zwischen den einzelnen Gleitschuhen 5, die erforderlich ist, um die geforderte hohe Anpassungsfähigkeit an den Walzenmantel 1 sicherzustellen, aber sie verhindert ein relatives Verkippen gegeneinander in einem solchen Ausmaß, daß nur sehr kleine, zu keinem Ölverlust und damit auch zu keinem Stützkraftverlust führende Keilspalte auftreten können.

Die erforderlichen Spannkräfte werden vorzugsweise mittels Spanndrähten 15 erzeugt, die durch zueinander ausgerichtete, die Gleitschuhe 5 im Bereich der Anlageflächen 13 durchsetzende Bohrungen geführt sind und mittels geeigneter Spannmittel 16, 17 im jeweils erforderlichen Ausmaß gespannt werden können. Dieses Ausmaß der Spannung kann in Abhängigkeit von betrieblichen Gegebenheiten, insbesondere in Abhängigkeit vom zwischen Walzenmantel und Gleitschuh herrschendem Schmiermitteldruck unterschiedlich gewählt werden.

Die Aufbringung der jeweils gewünschten Spannkraft kann auch durch hydraulisch, pneumatisch, elektromagnetisch, mechanisch oder motorisch beaufschlagte Spannmittel erfolgen und gegebenenfalls in Abhängigkeit von Betriebsbedingungen gesteuert oder geregelt modifiziert werden.

Um sicherzustellen, daß die durch gegenseitige Verspannung einzelner Gleitschuhe 5 geschaffene Gleitschuheinheit quer zur Laufrichtung des Walzenmantels 1 und auch in Walzenmantellaufrichtung eindeutig positioniert ist, kann die jeweilige Gleitschuheinheit mittig oder einseitig fixiert und insbesondere auch gegen einen Axialanschlag 14, der trägerfest ausgebildet ist, verspannt sein. Die jeweilige Fixierung der Gleitschuheinheit beeinträchtigt dabei nicht die relative Beweglichkeit der spaltfrei gegeneinander verspannten Einzel-Gleitschuhe 5.

Der Walzenmantel 1 kann bezüglich der Stützflächen 6 der Gleitschuhe 5 in bekannter Weise hydrostatisch oder hydrodynamisch gestützt sein.

Anstelle einer individuellen Druckbeaufschlagung der einzelnen Gleitschuhe 5 einer Gleitschuheinheit aus mehreren gegenseitig verspannten Gleitschuhen 5 kann auch eine gleichförmige Gleitschuhbeaufschlagung erfolgen, indem eine derartige Gleitschuh-Einheit nach Art eines einteiligen Gleitschuhs in einer gemeinsamen Druckwanne angeordnet wird.

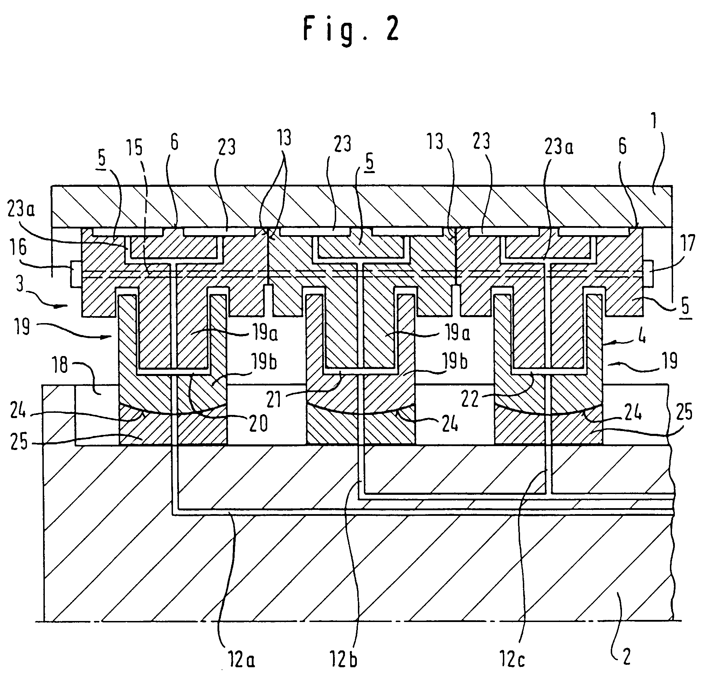

In Figur 2 ist eine weitere Ausführungsform einer Walzenanordnung gemäß der Erfindung dargestellt, wobei Bauteile dieser Ausführungsform mit gleichen Bezugsziffern wie entsprechende Bauteile der in Figur 1 dargestellten Ausführungsform bezeichnet sind.

Die Walzenanordnung nach Figur 2 umfaßt wiederum einen Walzenmantel 1, einen feststehenden Träger 2 und eine zwischen Walzenmantel 1 und Träger 2 vorgesehene Stützanordnung 3. Die Stützanordnung 3 besteht aus einer Mehrzahl von Gleitschuhen 5, die über Anlageflächen 13 mittels eines Spanndrahts 15 und geeigneter Spannmittel 16, 17 gegeneinander verspannt und zu einer Gleitschuheinheit zusammengefaßt sind.

Im Gegensatz zur Ausführungsform nach Figur 1 greifen die den Gleitschuhen 5 zugeordneten Fußteile 4 nicht unmittelbar in Ausnehmungen des Trägers 2 unter Ausbildung von Kolben-Zylinder-Einheiten ein, sondern es werden mehrteilig ausgebildete Fußteile 4 verwendet.

Die Fußteile 4 bestehen in der Ausführungsform nach Figur 2 aus einem vorzugsweise zylindrischen Gleitschuhansatz 19 a, der unter Ausbildung einer Kolben-Zylinder-Einheit 19 in eine entsprechende Aussparung eines Zwischenteils 19 b eingreift, das über ein Kipplager 24 mit kugelkalottenförmigen Lagerflächen auf einem Basisteil 25 abgestützt ist, das vorzugsweise verschiebbar auf der Bodenfläche einer sich in Axialrichtung des Walzenmantels erstreckenden Ausnehmung 18 des Trägers 2 abgestützt ist.

Durch das Vorsehen eines Kipplagers 24 und die freie Verschiebbarkeit des Basisteils 25 auf dem Träger 2 werden die Anpassungsmöglichkeiten der Gleitschuhe 5 an Verformungen des Walzenmantels weiter verbessert, und es wird sichergestellt, daß störende Verspannungen innerhalb der aus mehreren Gleitschuhen 5 bestehenden Gleitschuheinheit oder unterschiedliche Dehnungen in der Gleitschuheinheit und dem Träger nicht auftreten können, da entsprechende Ausgleichsbewegungen im Bereich des Kipplagers 24 und durch Verschiebungen des Basisteils 25 relativ zum Träger 2 gewährleistet sind.

Die Zylinder-Kolben-Einheit 19, die gegebenenfalls noch mit einer in gleicher Richtung wirkenden mechanischen Vorspanneinheit kombiniert sein kann, sind mit ihren Druckräumen 20, 21, 22 mit Druckmittelbohrungen 12 a, 12 b, 12 c verbunden und können, wie im Falle des Druckraums 20, einzeln oder gruppenweise, wie im Falle der Druckräume 21, 22, mit Druckfluid beaufschlagt werden.

In ihren Stützflächen 6 weisen die Gleitschuhe 5 Drucktaschen 23 auf, die zur hydrostatischen Abstützung des Walzenmantels 1 mit einem Hydraulikfluid versorgt werden. In der dargestellen Ausführungsform sind die Drucktaschen 23 hierzu mit den Druckräumen 20, 21, 22 der Zylinder-Kolben-Einheiten 19 über drosselnde Versorgungsbohrungen 23 a verbunden.

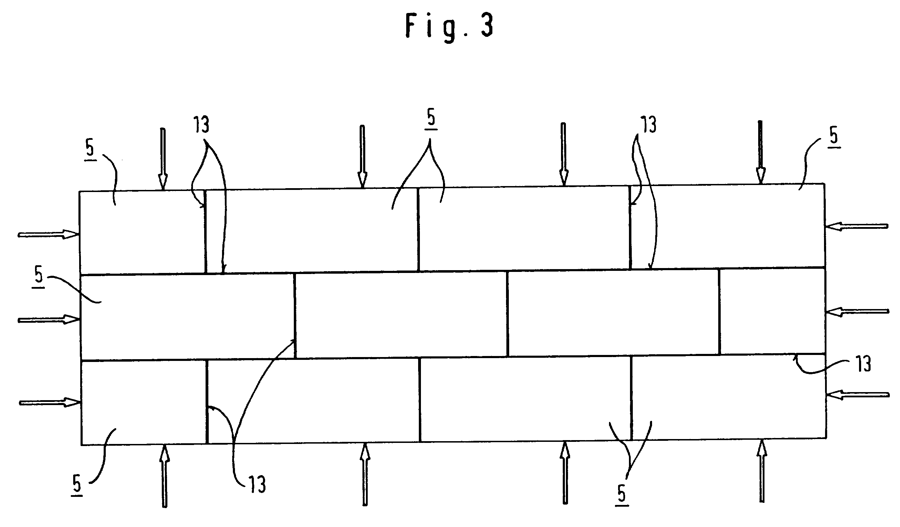

Figur 3 zeigt eine Gruppe von benachbart angeordneten Gleitschuhen 5 einer Walzenanordnung gemäß der Erfindung in Draufsicht, die in Axial- und in Umfangsrichtung eines Walzenmantels nebeneinanderliegend angeordnet sind. Konkret sind hierbei drei in Umfangsrichtung nebeneinanderliegende Reihen von sich in Axialrichtung erstreckenden Gleitschuhen 5 vorgesehen, wobei die Gleitschuhe 5 gegeneinander versetzt angeordnet sind.

In Figur 3 ist lediglich schematisch durch Pfeile angedeutet, daß die Gleitschuhe 5 sowohl in Axialrichtung als auch in Umfangsrichtung des Walzenmantels 1 gegeneinander verspannt sind, wobei durch nicht dargestellte Axial- und / oder Umfangsanschläge Fixpunkte geschaffen werden können, die eine eindeutige Positionierung der so gebildeten Gleitschuh-Einheit gewährleisten.

Zu erwähnen ist auch, daß zur Schaffung eines Temperaturausgleichs innerhalb der jeweiligen Gleitschuhe sich durch die Gleitschuhe 5 erstreckende Strömungskanäle für ein geeignetes Fluid vorgesehen sein können.

Ebenso ist es möglich, anstelle der in Figur 2 gezeigten hydrostatischen Abstützung des Walzenmantels bezüglich der Gleitschuhe 5 eine hydrodynamische Abstützung vorzusehen, ohne daß sich dadurch das Grundprinzip der gruppenweise unter Aufrechterhaltung einer relativen Beweglichkeit spaltfrei gegeneinander verspannten Gleitschuhe ändern würde.

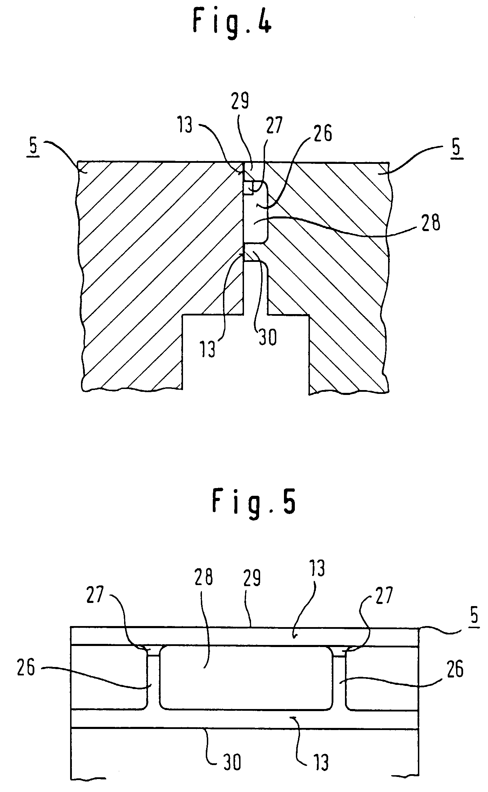

Die Figuren 4 und 5 zeigen, daß die Anlageflächen 13 zwischen benachbarten Gleitschuhen 5 nicht vollflächig eben ausgebildet sein müssen, sondern daß in zumindest einer der beiden Anlageflächen 13 Ausnehmungen 28 vorgesehen sein können.

Gemäß der Ausführungsvariante nach den Figuren 4 und 5 ist eine der Anlageflächen 13 so ausgebildet, daß die flächige Berührung zwischen zwei benachbarten Gleitschuhen 5 nur gering ist, was zur Folge hat, daß bei Aufbau eines Hydraulikdrucks nur eine kleine Kraft erhalten wird, welche die Gleitschuhe auseinanderdrücken könnte. Gleichzeitig ist die Berührungsfläche 13 so gestaltet, daß bei einem relativen Verschieben der berührenden Flächen zueinander diese sich nicht ineinander verhaken können.

Die Ausnehmung 28 in der Berührungsfläche 13 ist so gestaltet, daß der sich mantelseitig ergebende Steg 29 sehr schmal ist, während der trägerseitige Steg 30 eine vergleichbare Abmessung besitzt oder auch breiter ausgeführt sein kann. Als nicht einschränkendes Beispiel sei erwähnt, daß der mantelseitige Steg eine Breite von etwa 1 mm besitzen kann.

Die Ausnehmung 28 ist durch Vertikalstege 26 unterteilt, wobei in diesen Stegen 26 Durchlässe 27 vorgesehen sind, welche eine Verbindung zwischen den einzelnen Teilbereichen der Ausnehmung 28 in der Fläche 13 gewährleisten. Wegen dieser Durchlässe 27 kann sich kein hydraulischer Druck in den Kammern 28 und auf den Stegen 26 und 30 aufbauen.

Es wurde bereits erwähnt, daß Ausnehmungen von der Art der Ausnehmung 28 nach Figur 5 in beiden miteinander zusammenwirkenden Anlageflächen 13 vorgesehen sein können, aber es ist auch ausreichend, wie dies in den Figuren 4 und 5 gezeigt ist, wenn nur eine der Anlageflächen 13 eine solche Konfiguration besitzt.

Nach Figur 4 ist jeder Gleitschuh 5 im Anschluß an die jeweilige Anlagefläche 13 mit einem Freistich versehen, aber es wäre durchaus auch ausreichend, einen solchen Freistich nur bei einem der beiden zusammenwirkenden Gleitschuhe 5 vorzusehen, was herstellungstechnisch eine Vereinfachung erbringt.

## Patentansprüche

1. Walzenanordnung mit einem drehbaren, vorzugsweise flexiblen Walzenmantel (1), einem feststehenden Träger (2) und einer zwischen dem Walzenmantel (1) und dem Träger (2) angeordneten mehrteiligen Stützanordnung (3), die in Radialrichtung zum Walzenmantel (1) bewegbare Gleitschuhe (5) mit dem Walzenmantel (1) zugewandten Stützflächen (6) umfaßt,
**dadurch gekennzeichnet**,
daß in Axialrichtung und / oder in Umfangsrichtung des Walzenmantels (1) benachbart angeordnete Gleitschuhe (5) zumindest gruppenweise unter Aufrechterhaltung einer relativen Beweglichkeit zwischen den einzelnen Gleitschuhen (5) untereinander spaltfrei gegeneinander verspannt sind.

2. Walzenanordnung nach Anspruch 1,
**dadurch gekennzeichnet,**
daß benachbart angeordnete Gleitschuhe (5) nur stützflächenseitig im Bereich von stegförmigen Anlageflächen (13) insbesondere dichtend aneinanderliegen und trägerseitig beabstandet sind.

3. Walzenanordnung nach Anspruch 2,
**dadurch gekennzeichnet,**
daß die Anlageflächen (13) benachbarter Gleitschuhe (5) eben ausgebildet sind.

4. Walzenanordnung nach einem der Ansprüche 1 bis 3,
**dadurch gekennzeichnet,**
daß in Umfangsrichtung des Walzenmantels (1) benachbart angeordnete Gleitschuhe (5) in Axialrichtung des Walzenmantels (1) versetzt angeordnet sind.

5. Walzenanordnung nach einem der Ansprüche 2 bis 4,
**dadurch gekennzeichnet,**
daß die Radialerstreckung der Anlageflächen (13) geringer ist als die Radialerstreckung der sich gegenüberliegenden, beabstandeten Wandungen benachbarter Gleitschuhe (5).

6. Walzenanordnung nach einem der Ansprüche 1 bis 5,
**dadurch gekennzeichnet,**
daß zur gegenseitigen Verspannung der Gleitschuhe (5) elastische Elemente, vorzugsweise Drähte (15), vorgesehen sind, die die Gleitschuhe (5) durchlaufen und unter Zugspannung gehalten sind, wobei der jeweilige Spanndraht (15) durch gegenseitig ausgerichtete, die Gleitschuhe (5) im Bereich der Anlageflächen (13) durchsetzende Bohrungen geführt ist.

7. Walzenanordnung nach einem der Ansprüche 1 bis 6,
**dadurch gekennzeichnet,**
daß zur Aufbringung der Spannkraft hydraulisch, pneumatisch, elektromagnetisch, mechanisch oder motorisch beaufschlagte Spannmittel vorgesehen sind.

8. Walzenanordnung nach einem der Ansprüche 1 bis 7,
**dadurch gekennzeichnet,**
daß die Kraft, mit der die Gleitschuhe (5) gegeneinander verspannbar sind, variabel einstellbar ist.

9. Walzenanordnung nach einem der Ansprüche 1 bis 8,
**dadurch gekennzeichnet,**
daß die Gleitschuhe (5) gegen Verschieben in Axialrichtung des Walzenmantels (1) einseitig oder mittig fixiert und insbesondere gegen einen Axialanschlag (14) gespannt sind.

10. Walzenanordnung nach einem der vorhergehenden Ansprüche,
**dadurch gekennzeichnet,**
daß die in Umfangsrichtung des Walzenmantels (1) benachbart angeordneten, gegeneinander verspannten Gleitschuhe (5) gegen ein Verschieben in Umfangsrichtung des Walzenmantels (1) durch einen Umfangsanschlag gesichert oder gegen einen Umfangsanschlag gespannt sind.

11. Walzenanordnung nach einem der vorhergehenden Ansprüche,
**dadurch gekennzeichnet,**
daß jedem Gleitschuh (5) ein Fußteil (4) zugeordnet ist, das zusammen mit einer Fläche am Träger (2) oder einem am Träger (2) abgestützten Basiselement (25) eine hydraulisch oder pneumatisch beaufschlagbare Zylinder-Kolben-Einheit bildet, wobei das Basiselement (25) vorzugsweise bezüglich des Trägers (2) verschiebbar gelagert ist und die Zylinder-Kolben-Einheiten (19) insbesondere individuell oder in Gruppen beaufschlagbar sind.

12. Walzenanordnung nach einem der vorhergehenden Ansprüche,
**dadurch gekennzeichnet,**
daß in den Stützflächen (6) der Gleitschuhe (5) zur hydrostatischen Abstützung des Walzenmantels (1) Drucktaschen (23) vorgesehen sind, die mit einem Hydraulikmittel, vorzugsweise aus den Druckräumen (20, 21, 22) der Zylinder-Kolben-Einheiten (19), beaufschlagt sind.

13. Walzenanordnung nach einem der Ansprüche 1 bis 11,
**dadurch gekennzeichnet,**
daß den Stützflächen (6) zur hydrodynamischen Abstützung des Walzenmantels (1) ein Hydraulikmittel zugeführt ist.

14. Walzenanordnung nach einem der vorhergehenden Ansprüche,
**dadurch gekennzeichnet,**
daß die Stützflächen (6) eine konkave oder konvexe Form besitzen.

15. Walzenanordnung nach einem der vorhergehenden Ansprüche,
**dadurch gekennzeichnet,**
daß in den Gleitschuhen (5) Strömungskanäle für ein Temperaturausgleichsfluid vorgesehen sind.

16. Walzenanordnung nach einem der vorhergehenden Ansprüche,
**dadurch gekennzeichnet,**
daß Gruppen von gegenseitig verspannten Gleitschuhen (5) nach Art eines mehrteilig flächig ausgebildeten Kolbens jeweils in einer gemeinsamen Druckwanne angeordnet sind.

17. Walzenanordnung nach einem der Ansprüche 2 und 4 bis 16,
**dadurch gekennzeichnet,**
daß in zumindest einer Anlagefläche (13) wenigstens eine nach außen offene Ausnehmung (28) vorgesehen ist, die insbesondere in einer Anlagefläche (13) durch zumindest einen Steg (26) in Einzelbereiche unterteilt ist, wobei die Einzelbereiche über einen Durchlaß (27) in dem jeweiligen Steg (26) miteinander in Verbindung stehen, wobei vorzugsweise der die Ausnehmung (28) mantelseitig begrenzende Steg (29) sehr schmal ausgebildet ist und seine Breite insbesondere im Bereich von etwa 1 mm gelegen ist.

18. Walzenanordnung nach Anspruch 17,
**dadurch gekennzeichnet,**
daß der im jeweiligen Steg (26) ausgebildete Durchlaß (27) angrenzend an den mantelseitigen Steg (29) vorgesehen ist.

19. Walzenanordnung nach einem oder mehreren der vorhergehenden Ansprüche,
**dadurch gekennzeichnet**,
daß die Gleitschuhe (5) plan, konvex oder konkav ausgebildet sind und daß vorzugsweise als Walzenmantel (1) ein flexibles Tuch vorgesehen ist, das die Kontur der jeweiligen Gegenwalze annimmt.

## Claims

1. Roll arrangement comprising a rotatable, preferably flexible roll jacket (1), a stationary carrier (2) and a multi-part support arrangement (3) which is disposed between the roll jacket (1) and the carrier (2), with the roll arrangement including sliding shoes (5) which are movable in the radial direction relative to the roll jacket (1) and have support surfaces (6) facing the roll jacket (1), characterised in that neighbouring sliding shoes (5) in the axial direction and/or in the circumferential direction of the roll jacket (1) are clamped against one another at least groupwise in gap-free manner while maintaining relative movability between the individual sliding shoes.

2. Roll arrangement in accordance with claim 1, characterised in that neighbouring sliding shoes (5) only contact one another, and in particular sealingly contact one another, at their support surface ends in the region of web-like contact surfaces (13) and are spaced apart at the carrier side.

3. Roll arrangement in accordance with claim 2, characterised in that the contact surfaces (13) of neighbouring sliding shoes (5) are planar.

4. Roll arrangement in accordance with one of the claims 1 to 3, characterised in that neighbouring sliding shoes (5) in the circumferential direction of the roll jacket (1) are arranged displaced in the axial direction of the roll jacket (1).

5. Roll arrangement in accordance with one of the claims 2 to 4, characterised in that the radial extent of the contact surfaces (13) is smaller than the radial extent of the oppositely disposed spaced apart walls of neighbouring sliding shoes (5).

6. Roll arrangement in accordance with one of the claims 1 to 5, characterised in that resilient elements, preferably wires (15) which pass through the sliding shoes (5) and are kept in tension are provided for the mutual clamping of the sliding shoes (5), with the respective clamping wire (15) being guided through mutually aligned bores which pass through the sliding shoes (5) in the region of the contact surfaces (13).

7. Roll arrangement in accordance with one of the claims 1 to 6, characterised in that hydraulic, pneumatic, electromagnetic, mechanical or motorically stressed clamping means are provided for applying the clamping force.

8. Roll arrangement in accordance with one of the claims 1 to 7, characterised in that the force with which the sliding shoes (5) can be clamped against one another is variably adjustable.

9. Roll arrangement in accordance with one of the claims 1 to 8, characterised in that the sliding shoes are fixed at one end or at the centre against displacement in the axial direction of the roll jacket (1) and are in particular loaded against an axial abutment (14).

10. Roll arrangement in accordance with one of the preceding claims, characterised in that neighbouring sliding shoes (5) in the circumferential direction of the roll jacket (1) which are clamped against one another are secured against displacement in the circumferential direction of the roll jacket (1) by a peripheral abutment or are loaded against a peripheral abutment.

11. Roll arrangement in accordance with one of the preceding claims, characterised in that a foot (4) is associated with each sliding shoe (5) and forms a hydraulically or pneumatically loadable piston-in-cylinder unit together with a surface on the carrier (2), or with a base element supported on the carrier (2), with the base element (25) preferably being displaceably journalled relative to the carrier (2), and in that the piston-in-cylinder units (19) can be pressurised individually or in groups.

12. Roll arrangement in accordance with one of the preceding claims, characterised in that pressure pockets (23) are provided in the support surfaces (6) of the sliding shoes (5) for the hydrostatic support of the roll jacket (1) and are pressurised with a hydraulic medium, preferably from the pressure spaces (20, 21, 22) of the piston-in-cylinder units (19).

13. Roll arrangement in accordance with one of the claims 1 to 11, characterised in that a hydraulic medium is supplied to the support surfaces (6) for the hydrodynamic support of the roll jacket (1).

14. Roll arrangement in accordance with one of the preceding claims, characterised in that the support surfaces (6) have a concave or convex shape.

15. Roll arrangement in accordance with one of the preceding claims, characterised in that flow channels for a temperature compensation fluid are provided in the sliding shoes (5).

16. Roll arrangement in accordance with one of the preceding claims, characterised in that groups of mutually clamped sliding shoes (5) are respectively arranged in a common pressure trough in the manner of a multi-part piston of areal design.

17. Roll arrangement in accordance with one of the claims 2 and 4 to 16, characterised in that at least one outwardly open recess (28) is provided in at least one contact surface (13), and is subdivided in a contact surface (13) by at least one web (26) into individual regions, with the individual regions communicating with one another via a passage (27) in the respective web (26), and with the web (29) which bounds the recess (28) at the jacket side preferably being of very narrow design and its width lies in particular in the region of approximately 1 mm.

18. Roll arrangement in accordance with claim 17, characterised in that the passage (27) formed in the respective web (26) is provided adjacent to the jacket side web (29).

19. Roll arrangement in accordance with one or more of the preceding claims, characterised in that the sliding shoes (5) are flat, convex or concave and in that a flexible cloth is preferably provided as the roll jacket (1) which adapts to the contour of the respective counter-roll.

## Revendications

1. Agencement de rouleau comportant une enveloppe (1) de rouleau avantageusement souple, susceptible d'être mise en rotation, un support fixe (2) et un dispositif d'appui (3) en plusieurs parties, disposé entre l'enveloppe (1) de rouleau et le support (2), qui comprend des patins (5) susceptibles d'être déplacés radialement en direction de l'enveloppe (1) de rouleau, et comportant des surfaces d'appui (6) orientées vers l'enveloppe (1) de rouleau,
**caractérisé en ce que**
des patins (5), disposés au voisinage les uns des autres dans le sens axial et/ou dans le sens circonférentiel de l'enveloppe (1) de rouleau, sont serrés les uns contre les autres au moins par groupes, sans intervalles entre eux, en conservant une mobilité relative entre les patins individuels.

2. Agencement de rouleau selon la revendication 1,
**caractérisé en ce que**
des patins (5) disposés au voisinage les uns des autres, sont situés les uns à côté des autres uniquement du côté des surfaces d'appui, en particulier avec contact étroit dans la zone de surfaces d'application (13) en forme de barrettes, et sont situés à l'écart les uns des autres du côté du support.

3. Agencement de rouleau selon la revendication 2,
**caractérisé en ce que**
les surfaces d'appui (13) de patins (5) voisins sont réalisées de manière à être lisses.

4. Agencement de rouleau selon l'une des revendications 1 à 3,
**caractérisé en ce que**
des patins (5) disposés au voisinage les uns des autres dans le sens circonférentiel de l'enveloppe (1) de rouleau sont disposés avec décalage dans le sens axial de l'enveloppe (1) de rouleau.

5. Agencement de rouleau selon l'une des revendications 2 à 4,
**caractérisé en ce que**
l'extension des surfaces d'application (13) dans le sens radial est moins importante que l'extension, dans le sens radial, des parois situées en face les unes des autres, avec des intervalles entre elles, de patins (5) voisins.

6. Agencement de rouleau selon l'une quelconque des revendications 1 à 5,
**caractérisé en ce qu'**
en vue du serrage mutuel des patins (5) sont prévus des éléments élastiques, de préférence des fils métalliques (15), qui traversent les patins (5) et qui sont maintenus sous contrainte de traction, chaque fil de serrage (15) passant dans des trous percés qui traversent les patins (5) dans la zone des surfaces d'application (13).

7. Agencement de rouleau selon l'une des revendications 1 à 6,
**caractérisé en ce que**
pour l'application de la force de serrage, des moyens de serrage mis sous contrainte hydrauliquement, pneumatiquement, électromagnétiquement, mécaniquement, ou au moyen d'un moteur, sont prévus.

8. Agencement de rouleau selon l'une des revendications 1 à 7,
**caractérisé en ce que**
la force avec laquelle les patins (5) peuvent être serrés les uns contre les autres, peut être réglée de façon variable.

9. Agencement de rouleau selon l'une des revendications 1 à 8;
**caractérisé en ce que**
les patins (5) sont serrés en étant maintenus, d'un côté ou au milieu, fixes à l'encontre d'un déplacement dans le sens axial de l'enveloppe (1) de rouleau, en particulier contre une butée axiale (14).

10. Agencement de rouleau selon l'une des revendications précédentes,
**caractérisé en ce que**
les patins (5) disposés au voisinage les uns des autres, dans le sens circonférentiel de l'enveloppe (1) de rouleau, en étant serrés les uns contre les autres, sont maintenus fixes à l'encontre d'un déplacement dans le sens circonférentiel de l'enveloppe (1) de rouleau au moyen d'une butée circonférentielle, ou sont serrés contre une butée circonférentielle.

11. Agencement de rouleau selon l'une des revendications précédentes,
**caractérisé en ce qu'**
à chaque patin (5) est affectée une pièce formant pied (4) qui constitue, avec une surface du support (2), ou un élément de base (25) en appui sur le support (2), un ensemble cylindre-piston susceptible d'être mis sous contrainte hydrauliquement, ou pneumatiquement, l'élément de base (25) étant monté de préférence de façon à pouvoir être déplacé par rapport au support (2) et les ensembles cylindre-piston (19) pouvant en particulier être mis sous contrainte individuellement, ou par groupes.

12. Agencement de rouleau selon l'une des revendications précédentes,
**caractérisé en ce que**
sont prévues dans les surfaces d'appui (6) des patins (5), en vue de l'appui hydrostatique de l'enveloppe (1) de rouleau, des poches de pression (23) qui sont mises sous contrainte au moyen d'un fluide hydraulique, de préférence à partir des espaces de pression (20, 21, 22) des ensembles cylindre-piston (19).

13. Agencement de rouleau selon l'une des revendications 1 à 11,
**caractérisé en ce qu'**
un fluide hydraulique est amené aux surfaces d'appui (6) en vue de l'appui hydrodynamique de l'enveloppe (1) de rouleau.

14. Agencement de rouleau selon l'une des revendications précédentes,
**caractérisé en ce que**
les surfaces d'appui (6) ont une forme concave ou convexe.

15. Agencement de rouleau selon l'une des revendications précédentes,
**caractérisé en ce que**
des canaux d'écoulement destinés à un fluide d'égalisation des températures sont prévus dans les patins (5).

16. Agencement de rouleau selon l'une des revendications précédentes,
**caractérisé en ce que**
des groupes de patins serrés mutuellement (5), sont disposés à la manière d'un piston conformé avec une surface en plusieurs parties, chacun dans une cuvette de pression commune.

17. Agencement de rouleau selon l'une des revendications 2 et 4 à 16,
**caractérisé en ce qu'**
au moins dans une surface d'application (13) est prévu au moins un évidement (28) ouvert vers l'extérieur, qui est subdivisé en zones individuelles par au moins une barrette (26), en particulier dans une surface d'application (13), les zones individuelles communiquant entre elles par un passage (27) ménagé dans la barrette considérée (26), la barrette (29), délimitant l'évidement (28) du côté de l'enveloppe, étant de préférence conformée de façon à être étroite, et en particulier sa largeur ayant une dimension d'environ 1 mm.

18. Agencement de rouleau selon la revendication 17,
**caractérisé en ce que**
le passage formé dans la barrette considérée (26) est prévu de façon à être contigu à la barrette (29) située du côté de l'enveloppe.

19. Agencement de rouleau selon une ou plusieurs des revendications précédentes,
**caractérisé en ce que**
les patins (5) ont une forme plane, convexe, ou concave et que l'on prévoit en tant qu'enveloppe (1) de rouleau, de préférence un tissu souple qui prend la forme du contour du rouleau opposé considéré.
